# EUROPÄISCHE PATENTSCHRIFT

(11) **EP 3 746 739 B1**
(45) Veröffentlichungstag und Bekanntmachung des Hinweises auf die Patenterteilung: **14.06.2023**
(21) Anmeldenummer: 19701873.2
(22) Anmeldetag: 31.01.2019
(51) Int. Cl.: G01B 11/24, G01N 21/88, B21C 51/00, B22D 11/12

(54) **VORRICHTUNG UND VERFAHREN ZUR IDENTIFIKATION VON EQUIPMENT IN METALLURGISCHEN INDUSTRIEANLAGEN**
DEVICE AND METHOD FOR IDENTIFICATION OF EQUIPMENT IN METALLURGICAL INDUSTRIAL INSTALLATIONS
DISPOSITIF ET PROCÉDÉ D'IDENTIFICATION DE L'ÉQUIPEMENT DANS DES INSTALLATIONS INDUSTRIELLES MÉTALLURGIQUES

(30) Priorität: 01.02.2018 EP 18154667
(43) Veröffentlichungstag der Anmeldung: 09.12.2020
(73) Patentinhaber: Primetals Technologies Austria GmbH, 4031 Linz (AT)
(72) Erfinder: THAZHATH JOHNCE, Swathish, 4030 Linz (AT); FISCHER, Paul, 4040 Linz (AT); HARTL, Franz, 4720 Kallham (AT); KUEHAS, Thomas, 4225 Luftenberg (AT); ROHRHOFER, Andreas, 4070 Eferding (AT); VOGLMAYR, Bernhard, 4060 Leonding (AT); MAYRHOFER, Anna, 4722 Peuerbach (AT)
(74) Vertreter: Metals@Linz
(86) Internationale Anmeldenummer: PCT/EP2019/052399
(87) Internationale Veröffentlichungsnummer: WO 2019/149830

(56) Entgegenhaltungen:
- EP-A1- 1 524 047
- EP-A1- 2 813 584
- WO-A1-2016/119925
- JP-A- 2011 179 980
- US-A1- 2010 103 256

## Beschreibung

### Gebiet der Technik

Die vorliegende Erfindung betrifft das Gebiet der metallurgischen Industrieanlagen.

Die Erfindung betrifft eine Vorrichtung und ein Verfahren zur Identifizierung von Equipment, insbesondere metallurgischer Gefäße, in einer metallurgischen Industrieanlage.

### Stand der Technik

In metallurgischen Industrieanlagen ist viel Equipment im Einsatz, welches von einem Ort an einen anderen Ort in der metallurgischen Industrieanlage transportiert wird. Dieses Equipment ist beispielsweise ein metallurgisches Gefäß, um Roheisenschmelzen, Stahlschmelzen, flüssige Schlacken, Schrott und dergleichen zu transportieren. Um in der metallurgischen Industrieanlage Abläufe logistisch optimal zu gestalten, sollte das Equipment möglichst gut nachverfolgt werden. Die Nachverfolgung von Equipment ermöglicht es, einem Kranfahrer oder Anlagenbediener stets das richtige Equipment an den gewünschten Ort zu bringen.

Für eine Identifizierung von Equipment ist beispielsweise die WO2016119925A1 bekannt, welche Transponder an dem Equipment anbringt. Bei den Transpondern handelt es sich um SAW - oder RFID - Transponder. Ein Nachteil dieser Transponder ist, dass diese für Temperaturen über 400°C, wenn beispielsweise eine längere Behandlungsdauer in einer Vakuumanlage erfolgt, nicht geeignet sind. Es herrschen in einer metallurgischen Industrieanlage auch raue Umgebungsbedingungen wie hohe Temperaturschwankungen, hohe Staubbelastungen, hohe mechanische Beanspruchung durch Wärmedehnungen und viele andere. In der US 2010/0103256 A1 ist ein Verfahren zum Erkennen von Oberflächenmerkmalen metallurgischer Erzeugnisse gezeigt. Bei diesem Verfahren werden optoelektronische Sensoren verwendet und zur besseren Erfassung von dreidimensionalen Topographien wird eine Stereo Technologie - also zwei Kameras - verwendet.

### Zusammenfassung der Erfindung

Die Aufgabe der vorliegenden Erfindung besteht somit darin, eine zuverlässige Identifikation von Equipment, in einer metallurgischen Industrieanlage, zur Verfügung zu stellen, welche unempfindlich gegen die rauen Umgebungsbedingungen ist.

Die Aufgabe wird durch eine dreidimensionale Identifizierungsmarke - insbesondere eine Lochplatte oder eine Platte mit dreidimensionalem Muster - und durch eine Empfangsvorrichtung, welche geeignet ist das Equipment mit der dreidimensionalen Identifizierungsmarke zu erfassen, gelöst.

Eine Auswerteeinheit sorgt dafür, dass anhand des erfassten Equipments mit der dreidimensionalen Identifizierungsmarke das Equipment eindeutig identifiziert wird. Die dreidimensionale Identifizierungsmarke kann binär codiert sein, beispielsweise in dem eine Platte in mehrere Abschnitte unterteilt ist und die einzelnen Abschnitte entweder ein bestimmtes dreidimensionales Muster aufweisen, was jeweils für die binäre Eins steht, oder der jeweilige Abschnitt keine Muster aufweist, also glatt ist, was die binäre Null darstellt. Es ist natürlich auch denkbar, dass jeder Abschnitt mehrere unterschiedliche Muster aufweisen kann. Die dreidimensionale Identifizierungsmarke kann eine dreidimensionale Erhöhung oder Vertiefung sein, wie zum Beispiel Buchstaben, Arabische oder Römische Ziffern oder sonstige Schriftzeichen - wie beispielsweise Chinesische, Japanische oder Koreanische Schriftzeichen. Die dreidimensionale Identifizierungsmarke mittels Buchstaben, Ziffern oder Schriftzeichen hat vor allem den Vorteil, dass diese von Personen schnell erfasst und zugeordnet werden können - ohne Umrechnungsschritt wie dies bei einem binären Muster der Fall ist. Die Empfangsvorrichtung kann das Equipment mit der dreidimensionalen Identifizierungsmarke als eine sogenannte Szene erfassen. Eine nachfolgende Auswerteeinheit kann dann die Szene auswerten und die dreidimensionale Identifizierungsmarke erkennen und anhand der dreidimensionalen Identifizierungsmarke das Equipment eindeutig zuordnen. Durch die Verwendung einer Time of Flight (TOF) Kamera mit einem Photonic Mixing Device (PMD) Sensor - als Empfangsvorrichtung - kann Equipment auch dann noch erfasst werden, wenn dieses hohen Temperaturen ausgesetzt ist oder war. Weiters ist das Erfassen, unabhängig von der Temperatur des Equipments, immer möglich - also bei kalten als auch bei warmen Temperaturen. Die dreidimensionale Identifizierungsmarke wird auch so ausgeführt, dass sie sehr robust gegen Stöße und unempfindlich gegen Staubablagerungen ist. Die Installation einer solchen Empfangsvorrichtung ist sehr einfach. Die dreidimensionale Identifizierungsmarke muss am Equipment an einem für die Empfangsvorrichtung erfassbaren Bereich angebracht werden. Die Auswerteeinheit gibt eine Fehlermeldung aus, wenn keine dreidimensionale Identifizierungsmarke am Equipment erkannt wird. Die Auswerteeinheit kann in ein übergeordnetes Automatisierungs- bzw. Leitsystem integriert werden.

Die Empfangsvorrichtung ist eine Time of Flight (TOF) Kamera mit einem Photonic Mixing Device (PMD) Sensor. Der PMD Sensor ist in der Lage das Equipment und die dreidimensionale Identifizierungsmarke in räumlichen Dimensionen präzise zu erfassen. Eine TOF Kamera mit einem PMD Sensor ist sehr robust, verschleißfrei und wartungsarm. Die besondere Arbeitsweise der TOF Kamera mit dem PMD Sensor gewährleistet ein zuverlässiges Erfassen der dreidimensionalen Identifizierungsmarke auch bei Dunkelheit oder externer Lichteinstrahlung, beispielsweise durch die Sonneneinstrahlung. In Bezug auf diese Erfindung ist unter Equipment, vorzugsweise ein metallurgisches Gefäß oder Transportmittel in metallurgischen Industrieanlagen - um Rohstoffe, Zwischenprodukte oder Endprodukte einer metallurgischen Industrieanlage zu transportieren - zu verstehen.

Eine vorteilhafte Ausführungsform sieht vor, dass die Empfangsvorrichtung in einem Schutzgehäuse untergebracht ist. In einer metallurgischen Industrieanlagen herrschen sehr raue Bedingungen mit wechselnden Temperaturen und hoher Staubbelastung. Durch das Schutzgehäuse - für das dreidimensionale Kamerasystem - ist ein sicherer und störungsfreier Betrieb der Identifizierung des Equipments gewährleistet.

Eine bevorzugte Ausführungsform ist, dass die Auswerteeinheit geeignet ist Hindernisse oder Gefahren, insbesondere Gegenstände, Personen in einem Gefahrenbereich oder fehlende Anschlüsse von Versorgungsleitungen, erkennen zu können. Die Auswerteeinheit soll so ausgestaltet sein, dass es möglich ist, von der Empfangsvorrichtung empfangene Aufnahmen in Bezug auf Hindernisse oder Gefahren auszuwerten. Durch Verwendung einer Time of Flight (TOF) Kamera mit einem Photonic Mixing Device (PMD) Sensor liegen zu jedem Pixel Entfernungsdaten vor. Dies erlaubt es eine Auswerteeinheit in der Art zu schaffen, die beispielsweise Personen die sich in einem definierten Gefahrenbereich befinden zu erkennen und einen Alarm auszulösen oder den Anlagenbediener auf andere Weise zu informieren. Für den Fall, dass sich eine Person oder ein anderes Hindernis zwischen Empfangsvorrichtung und der dreidimensionalen Identifizierungsmarke aufhält, kann dies dem Anlagenbetreiber ebenfalls mitgeteilt werden. In diesem Fall wird mit der Identifizierung von Equipment gewartet bis die Person oder das Hindernis wieder entfernt wurde oder der Anlagenbediener eine andere Vorgehensweise vorgibt.

Eine weitere vorteilhafte Ausführungsform sieht vor, dass die Auswerteeinheit geeignet ist zu erkennen, an welcher Position sich das Equipment in der metallurgischen Industrieanlage aufhält. In einem Stahlwerk wird Equipment wie beispielsweise Pfannen, Schlackekübel oder Schrottschurren mit flüssigem oder festem Material befüllt. Wenn beispielsweise flüssiger Stahl in Pfannen gekippt wird ist es sehr wichtig, dass sich die Pfanne am richtigen Ort befindet, da ansonsten der flüssige Stahl daneben gekippt wird. Durch die beschriebene Vorrichtung kann vorteilhafter Weise neben dem Identifizieren des Equipments auch gleichzeitig erkannt werden, ob sich das Equipment auf einer vorbestimmten Position aufhält, bevor ein weiterer Arbeitsschritt gestartet wird. Mit der Empfangsvorrichtung und der Auswerteeinheit kann eine genaue Abstellposition - von beispielsweise einer Pfanne - erkannt und erfasst werden. Dies ist besonders bei automatischen Kranbewegungen notwendig, wenn dieser eine zuvor abgestellte Pfanne voll automatisch mit dem Kranhaken aufnehmen soll. Durch die Kenntnis des Aufstellungsorts der Empfangsvorrichtung in der metallurgischen Industrieanlagen kann die Aufstellposition dem übergeordneten Automatisierungs- bzw. Leitsystem übermittelt werden und beispielsweise der Kran automatisch gesteuert werden. Die Aufnahme des Gefäßes durch den Kran, mithilfe der Empfangsvorrichtung und der Auswerteeinheit, kann dann automatisch erfolgen.

Eine besonders bevorzugte Ausführungsform sieht vor, dass die Auswerteeinrichtung einen Triggereingang aufweist und der Triggereingang mit einer Triggereinheit verbunden ist. Die Triggereinheit sendet ein Signal an den Triggereingang der Auswerteeinrichtung. Durch dieses Signal wird ein Auswertungs- oder Identifizierungsvorgang gestartet oder gestoppt. Die Triggereinheit kann eine Lichtschranke, ein Näherungssensor oder ein sonstiger Schalter sein. Die Triggereinheit erkennt, dass sich ein Equipment nähert und startet somit den Auswertungs- oder Identifizierungsvorgang. Dies hat den Vorteil, dass die Vorrichtung nicht permanent aktiv sein muss, wodurch Energie, Rechen- und Speicherleistung reduziert werden können. Des Weiteren dient diese Triggereinrichtung auch einer Plausibiliätskontrolle und zur Fehlerminimierung, da die Triggereinrichtung schon eine Vorselektierung vornimmt, ob es sich um ein zu identifizierendes Equipment handeln kann.

Eine besonders vorteilhafte Ausführungsform sieht vor, dass die Auswerteeinheit geeignet ist einen Typ des Equipments zu erkennen, wobei die Auswerteeinheit mit einem Speicher verbunden ist und Daten zu diesem Typ des Equipments aus dem Speicher auslesen kann. Bei diesen Daten handelt es sich - insbesondere um geometrische Daten des Equipments und/oder der dreidimensionalen Identifizierungsmarke - beispielsweise um:
- den genauen Ort an dem die Identifizierungsmarke - bei diesem bestimmten Typ des Equipments - angebracht ist,
- die Abmessungen und / oder Form der dreidimensionalen Identifizierungsmarke und / oder des Equipments,
- die Orientierung der dreidimensionalen Identifizierungsmarke gegenüber einem Bezugssystems des Equipments und /oder
- die Orientierung des Bezugssystems des Equipments und/oder der dreidimensionalen Identifizierungsmarke gegenüber einem Bezugssystems der Empfangsvorrichtung.

Es hat sich bei der Auswertung gezeigt, dass die Einbeziehung solcher Daten des Equipments und / oder der dreidimensionalen Identifizierungsmarke zu besseren Ergebnissen bei der Identifizierung der dreidimensionalen Identifizierungsmarke führen. Die Empfangsvorrichtung nimmt dreidimensionale Informationen auf, welche in der Auswerteeinrichtung verarbeitet werden. Wenn beispielsweise die dreidimensionale Identifizierungmarke in einem bestimmten Winkel angebracht ist, kann diese Information dazu genutzt werden die dreidimensionale Identifizierungsmarke mittels Drehmatrizen für die Auswertung zu drehen. Damit kann eine verbesserte Auswertung erfolgen. Wenn die Identifizierungsmarke auf einem gekrümmten Untergrund aufgebracht ist, wird diese Information dazu genutzt diese Krümmung zu kompensieren, um eine flache Bezugsebene zu erhalten. Die Position der Empfangsvorrichtung ist ebenfalls von entscheidender Bedeutung, wenn beispielsweise die Empfangsvorrichtung in einer bestimmten Höhe - nach unten geneigt - montiert ist. Diese Information wird dann ebenfalls in die Auswertung einbezogen um eine flache Bezugsebenen zu erhalten.

Die erfindungsgemäße Aufgabe wird durch das eingangsgenannte Verfahren gelöst.

Das Equipment mit einer dreidimensionalen

Identifizierungsmarke, insbesondere eine Lochplatte oder eine Platte mit dreidimensionalen Mustern, wird durch eine Empfangsvorrichtung, welche eine Time of Flight (TOF) Kamera mit einem Photonic Mixing Device (PMD) Sensor ist, erfasst. Eine Zuordnung von dreidimensionaler Identifizierungsmarke und Equipment ist in einer Auswerteeinheit abgespeichert oder kann von der Auswerteeinheit von einem externen Speicher ausgelesen werden. Durch die Auswerteeinheit wird die dreidimensionale Identifizierungsmarke erkannt. Die Auswerteeinheit bestimmt anhand der dreidimensionalen Identifizierungsmarke das Equipment.

Durch dieses Verfahren ist es möglich das Equipment jederzeit und unabhängig von etwaigen Temperaturen zu erkennen. Die dreidimensionale Identifizierungsmarke ist sehr robust gegenüber den rauen Bedingungen in einer metallurgischen Industrieanlage. Diese dreidimensionale Identifizierungsmarke ist unempfindlich gegenüber Stößen, Temperaturschwankungen und Staub. Die Empfangsvorrichtung kann unabhängig von etwaigen dreidimensionalen Identifizierungsmarken installiert werden. Es ist beispielsweise denkbar, dass sich die Identifizierungsmarken im Laufe der Zeit ändern. Die geänderten dreidimensionalen Identifizierungsmarken müssen dann nur in der Auswerteeinheit abgespeichert werden und entsprechend dem Equipment zugeordnet werden. Die Kombination von dreidimensionaler Identifizierungsmarke, dreidimensionalem Kamerasystem und Auswerteeinheit ermöglicht es, dass Equipment zuverlässig identifiziert werden kann - unabhängig von Lichtverhältnissen, Temperatur und etwaiger Bewegung des Equipments.

Es muss auch nicht beachtet werden, dass die dreidimensionalen Identifizierungsmarken möglichst an Orten mit geringer oder hoher Wärmestrahlung angebracht werden.

Eine vorteilhafte Ausführungsform sieht vor, dass die Empfangsvorrichtung das Equipment erfasst und die Auswerteeinheit den Typ des Equipment direkt bestimmt. Unter Typ wird hierbei verstanden, ob es sich beispielsweise um eine Pfanne, einen Schlackekübel, einen Verteiler oder eine Schrottschurre handelt. Dies hat den Vorteil, dass immer überprüft werden kann, ob das aufgrund der erfassten dreidimensionalen Identifizierungsmarke bestimmte Equipment und der erkannte Typ übereinstimmen. Sollte ein in der Auswerteeinheit hinterlegter Typ, welcher sich durch die erfasste dreidimensionale Identifizierungsmarke ergibt, mit dem erkannten Typ nicht übereinstimmen, wird eine Fehlermeldung ausgegeben.

Eine besondere Ausführungsvariante der Erfindung sieht vor, dass anhand dieses Typs Daten, insbesondere zur genauen Position der dreidimensionalen Identifizierungsmarke, aus einem Speicher auslesen werden, wobei die Auswerteeinheit diese Daten für die Identifizierung der dreidimensionalen Identifizierungsmarke heranzieht. Diese Variante hat die gleichen Vorteile wie bereits bei der Vorrichtung erläutert, ebenso werden vorzugsweise die bei der Vorrichtung beschriebenen Daten herangezogen. Wenn die dreidimensionale Identifizierungsmarke auf einer gekrümmten Oberfläche angebracht ist erfolgt eine Kompensation, sodass eine gerade Bezugsebene vorliegt. Bei schräger Anordnung der dreidimensionalen Identifizierungsmarke erfolgt mittels Drehmatrizen eine Drehung in eine für die Identifizierung vorteilhafte Bezugsebene. In Versuchen hat sich gezeigt, dass durch Erzeugung einer flachen / geraden Bezugsebene sehr zuverlässige Ergebnisse erzielt werden können. Dieses Verfahren ist dadurch besonders robust gegen Verschmutzungen und eine zuverlässige Erkennung der dreidimensionalen Identifizierungsmarke ist gewährleistet.

Als besonders vorteilhaft hat es sich erwiesen, dass durch die Auswerteeinheit Hindernisse oder Gefahren, insbesondere Gegenstände, Personen oder fehlende Anschlüsse von Versorgungsleitungen, welche sich in einem definierten Gefahrenbereich befinden, erkannt werden. Diese Ausführungsform ermöglicht es, dass ein Alarm ausgelöst werden kann, wenn eine Gefahr erkannt wird. Des Weiteren kann dem Anlagenbediener mitgeteilt werden, wenn beispielsweise zwischen Empfangsvorrichtung und Equipment ein Hindernis erkannt wird.

Eine weitere vorteilhafte Ausführungsform sieht vor, dass die Auswerteeinheit erkennt, an welcher Position sich das Equipment in der metallurgischen Industrieanlage aufhält. Dies ist besonders dann vorteilhaft, wenn beispielsweise flüssiger Stahl von einem Konverter in das Equipment - beispielsweise eine Stahlpfanne - eingegossen wird. Hierzu ist es wichtig, dass das Equipment an der richtigen Position platziert ist, damit der flüssige Stahl in die Stahlpfanne gegossen wird und nicht daneben. Die Empfangsvorrichtung wird dann neben dem Identifizieren des Equipments auch für die Positionserkennung verwendet. Wie bereits bei der Vorrichtung erläutert ist diese Ausführung auch für ein automatisiertes Aufnehmen von Equipment durch einen Kran sehr vorteilhaft.

In einer weiteren zweckmäßigen Ausprägung weist die Auswerteeinrichtung einen Triggereingang auf. Eine Triggereinheit übermittelt ein Signal an den Triggereingang, dadurch wird die Identifizierung von Equipment gestartet oder beendet. Dies hat den Vorteil, dass die Vorrichtung nicht permanent aktiv sein muss, wodurch Energie, Rechen- und Speicherleistung reduziert werden können. Des Weiteren dient diese Triggereinrichtung auch einer Plausibiliätskontrolle und zur Fehlerminimierung. Die Triggereinheit ist so ausgeführt, dass Equipment erkannt wird welches sich der Empfangsvorrichtung nähert.

Eine weitere bevorzugte Ausführungsform sieht vor, dass durch ein entsprechend positioniertes dreidimensionales Kamerasystem und die Auswerteeinheit ein Beladungszustand des Equipments direkt erkannt wird. Es kann beispielsweise erkannt werden, ob das Equipment teilweise gefüllt ist, leer ist oder voll ist. Diese Information kann dann mit der in der Auswerteeinheit hinterlegten Information abgeglichen werden. Sollte der Vergleich von erfasstem Beladungszustand und in der Auswerteeinheit hinterlegtem Beladungszustand nicht übereinstimmen, kann ebenfalls eine Fehlermeldung ausgegeben werden. Diese Ausführung verbessert die Zuverlässigkeit der Identifikation von Equipment gegenüber anderen bekannten Methoden.

Die Erfindung ist in den unabhängigen Ansprüchen 1 und 7 definiert.

Kurze Beschreibung der Zeichnungen Weitere Vorteile und Merkmale der vorliegenden Erfindung ergeben sich aus der nachfolgenden Beschreibung nicht einschränkender Ausführungsbeispiele, wobei auf die folgenden Figuren Bezug genommen wird, die folgendes zeigen:
Fig. 1 zeigt eine schematische Darstellung einer erfindungsgemäßen Vorrichtung zum Identifizieren von Equipment.
Fig. 2a-2f zeigen mögliche Ausführungsformen von dreidimensionalen Identifizierungsmarken.
Fig. 3 zeigt eine schematische Darstellung einer bevorzugten erfindungsgemäßen Vorrichtung zum Identifizieren von Equipment.

### Beschreibung der Ausführungsformen

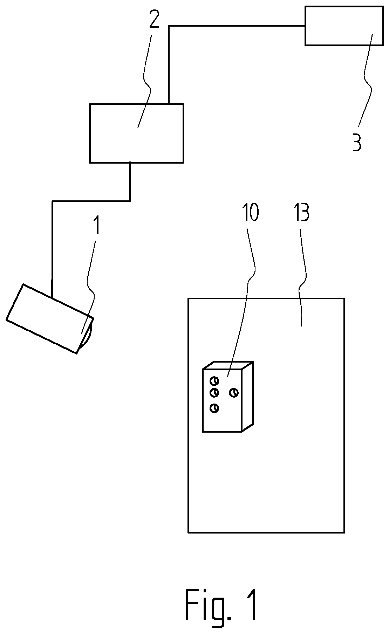

In Figur 1 sind schematisch die Komponenten einer erfindungsgemäßen Vorrichtung zum Identifizieren von Equipment dargestellt. Eine Empfangsvorrichtung 1 erfasst Equipment 13, welches eine dreidimensionale Identifizierungsmarke 10 aufweist. Die von der Empfangsvorrichtung 1 erfassten Szenen werden an eine Auswerteeinheit weitergeleitet, welche die dreidimensionale Identifizierungsmarke auf erfassten Szenen erkennt und danach das Equipment anhand der dreidimensionalen Identifizierungsmarke bestimmen kann. Des Weiteren kann die Auswerteeinheit in einer bevorzugten Ausführungsform auch die Art des erfassten Equipments identifizieren. Es kann durch eine derartige Empfangsvorrichtung 1 erkannt werden, ob es sich um eine Pfanne, einen Schlackekübel, eine Schrottschurre oder ähnliches handelt. Es ist auch möglich zu erkennen, ob das jeweilige Equipment 13 beladen oder unbeladen ist. Alle Informationen, welche durch die Auswerteeinheit 2 ermittelt werden, können dann an ein übergeordnetes Leitsystem 3 weitergeleitet werden. Das Leitsystem 3 speichert und / oder übermittelt die jeweiligen Informationen innerhalb und / oder außerhalb der metallurgischen Industrieanlage.

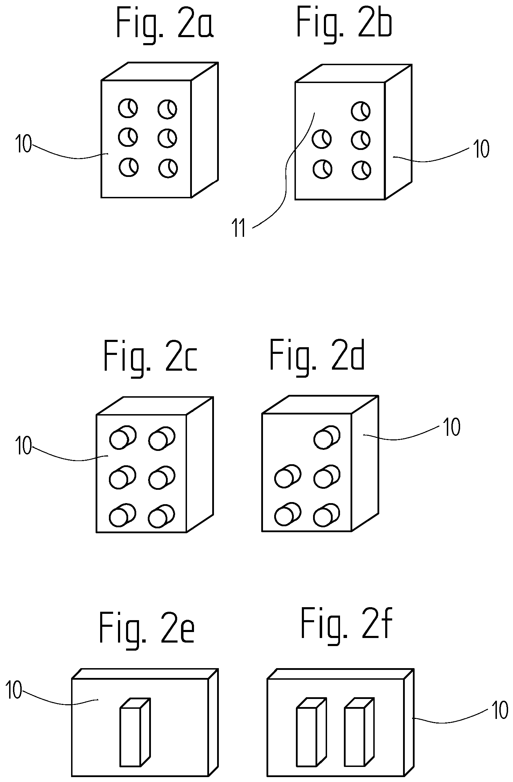

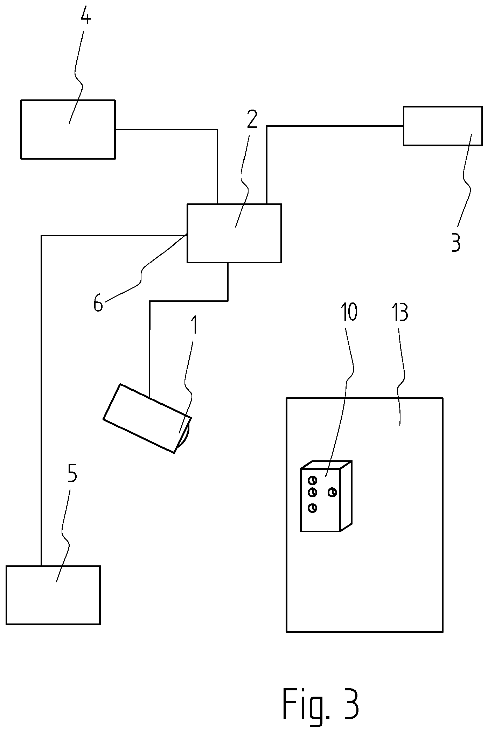

In den Figuren 2a bis 2f sind verschiedenste Formen der dreidimensionalen Identifizierungsmarken 10 dargestellt. In Figur 2a weist die dreidimensionale Identifizierungsmarke 10 Bohrungen auf. Die dreidimensionale Identifizierungsmarke 10 ist in sechs verschiedene Abschnitte 11 unterteilt. Die Kodierung kann, wie in Figur 2a dargestellt, binär erfolgen, wobei eine Bohrung für eine logische Eins steht und keine Bohrung für die logische Null. In der Figur 2a sind alle sechs Abschnitte mit Bohrungen versehen - somit ergibt sich bei sechs Bits die Zahl 63. In Figur 2b ist im Abschnitt 11 keine Bohrung vorhanden. Der Abschnitt 11 ist das höchstwertigste Bit, womit sich durch die Nichtbelegung des hochwertigsten Bits die Zahl 31 ergibt. In der Figur 2c und Figur 2d stehen zylindrische Körper von einer Platte ab, was für die logische Eins steht. Wenn keine zylindrischen Körper abstehen wird die logische Null abgebildet. Die Kodierung kann analog - wie in Figur 2a beschrieben - erfolgen. In Figur 2e und Figur 2f wird die dreidimensionale Identifizierungsmarke derart ausgebildet, dass Zeichen - im speziellen Fall römische Ziffern - verwendet werden. Es ist aber auch denkbar arabische Ziffern oder einfach andere dreidimensionale Muster zu verwenden. Diese Ziffern oder Muster werden dann in der Auswerteeinheit entsprechend zugeordnet, damit es möglich ist das Equipment zuzuordnen. In Fig. 3 ist neben den Komponenten aus Fig. 1 auch noch ein Speicher 4 dargestellt. Auf diesem Speicher 4 sind unter anderem geometrische Daten zur Position der dreidimensionalen Identifizierungsmarke 10 abgelegt. Diese Daten ermöglichen eine noch zuverlässigere Identifizierung des Equipments 1 durch die Auswerteeinheit 2. Wenn die dreidimensionale Identifizierungsmarke auf einer gekrümmten Oberfläche oder in einem bestimmten Winkel am Equipment angeordnet ist, kann die Auswertung noch zuverlässiger erfolgen, wenn eine gerade Bezugsfläche erzeugt wird oder die gekrümmte Oberfläche kompensiert wird. Des Weiteren weist die Auswerteeinheit 2 einen Triggereingang 6, welcher mit einer Triggereinheit 5 verbunden ist, auf. Die Triggereinheit 5 kann ein Näherungssensor, eine Lichtschranke, Temperatursensor oder ähnliches sein. Die Triggereinheit 5 soll dazu dienen, dass diese erkennt ob sich Equipment der Empfangsvorrichtung 1 nähert. Das zu identifizierende Equipment 13 kann unterschiedliche Eigenschaften aufweisen, wie beispielsweise große Abmessung für Schrottschurren oder hohe Temperatur bei Transport von flüssigem Metall. Je nachdem welches Equipment identifiziert werden soll kann die passende Triggereinheit 5 ausgewählt werden.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: Empfangsvorrichtung
- 2: Auswerteeinheit
- 3: Leitsystem
- 4: Speicher
- 5: Triggereinheit
- 6: Triggereingang
- 10: Dreidimensionale Identifizierungsmarke
- 11: Abschnitt
- 13: Equipment

## Patentansprüche

1. Vorrichtung zur Identifizierung von Equipment (13), insbesondere metallurgischer Gefäße, in einer metallurgischen Industrieanlage, umfassend eine am Equipment (13) angebrachte Identifizierungsmarke, eine Empfangsvorrichtung und eine Auswerteeinheit, welche anhand der Identifizierungsmarke das Equipment (13) erkennt, die Identifizierungsmarke eine dreidimensionale Identifizierungsmarke (10), insbesondere eine Lochplatte oder eine Platte mit dreidimensionalen Mustern, ist, **dadurch gekennzeichnet, dass**
- die Empfangsvorrichtung (1), eine Time of Flight (TOF) Kamera mit einem Photonic Mixing Device (PMD) Sensor ist, welche das Equipment (13) mit der dreidimensionalen Identifizierungsmarke (10) erfasst,
- eine Auswerteeinheit (2), die geeignet ist anhand des erfassten Equipments (13) mit der dreidimensionalen Identifizierungsmarke (10) das Equipment (11) eindeutig zu identifizieren.

2. Vorrichtung zur Identifizierung von Equipment nach Anspruch 1, **dadurch gekennzeichnet, dass** das Empfangsvorrichtung (1) in einem Schutzgehäuse untergebracht ist.

3. Vorrichtung zur Identifizierung von Equipment nach Anspruch 1 oder 2, **dadurch gekennzeichnet, dass** die Auswerteeinheit (2) geeignet ist Hindernisse oder Gefahren, insbesondere Gegenstände, Personen in einem definierten Gefahrenbereich oder fehlende Anschlüsse von Versorgungsleitungen, erkennen zu können.

4. Vorrichtung zur Identifizierung von Equipment nach Anspruch 1 - 3, **dadurch gekennzeichnet, dass** die Auswerteeinheit (2) geeignet ist eine Position des Equipments in der metallurgischen Industrieanlage zu bestimmen.

5. Vorrichtung zur Identifizierung von Equipment nach Anspruch 1 - 4, **dadurch gekennzeichnet, dass** die Auswerteeinrichtung (2) einen externen Triggereingang (6) aufweist, und der Triggereingang mit (6) einer Triggereinheit (5), welche geeignet ist Equipment zu erkennen, verbunden ist.

6. Vorrichtung zur Identifizierung von Equipment nach Anspruch 1 - 5, **dadurch gekennzeichnet, dass** die Auswerteeinheit (2) geeignet ist einen Typ des Equipments (13) zu erkennen und die Auswerteeinheit mit einem Speicher (4) verbunden ist, um Daten zu diesem Typ auszulesen.

7. Verfahren zur Identifikation von Equipment, insbesondere metallurgischer Gefäße, in einer metallurgischen Industrieanlage, das Equipment (13) eine dreidimensionale Identifizierungsmarke (10), insbesondere eine Lochplatte oder eine Platte mit dreidimensionalen Mustern, aufweist, **dadurch gekennzeichnet, dass**
- das Equipment (13) mit der dreidimensionale Identifizierungsmarke (10) durch eine Empfangsvorrichtung (1), welche eine Time of Flight (TOF) Kamera mit einem Photonic Mixing Device (PMD) Sensor ist, erfasst wird,
- eine Zuordnung von dreidimensionaler Identifizierungsmarke (10) und Equipment (13) in einer Auswerteeinheit (2) oder einem Speicher (4) abgespeichert ist
- durch die Auswerteeinheit (2) die dreidimensionale Identifizierungsmarke (10) erkannt wird,
- die Auswerteeinheit (2) anhand der dreidimensionalen Identifizierungsmarke (10) das Equipment (13) identifiziert.

8. Verfahren zur Identifikation von Equipment nach Anspruch 7, **dadurch gekennzeichnet, dass** durch die Empfangsvorrichtung (1) das Equipment erfasst wird und die Auswerteeinheit (2) einen Typ des Equipment (13) direkt bestimmt.

9. Verfahren zur Identifikation von Equipment nach Anspruch 8, **dadurch gekennzeichnet, dass** anhand dieses Typs Daten, insbesondere Daten zur genauen Position der dreidimensionalen Identifizierungsmarke (10), aus einem Speicher (4) auslesen werden, wobei die Auswerteeinheit (2) diese Daten für die Identifizierung der dreidimensionalen Identifizierungsmarke (10) heranzieht.

10. Verfahren zur Identifikation von Equipment nach Anspruch 7 - 9, **dadurch gekennzeichnet, dass** durch die Auswerteeinheit (2) Hindernisse oder Gefahren, insbesondere Gegenstände, Personen oder fehlende Anschlüsse von Versorgungsleitungen, welche sich in einem definierten Gefahrenbereich befinden, erkannt werden.

11. Verfahren zur Identifikation von Equipment nach Anspruch 7 - 10, **dadurch gekennzeichnet, dass** die Auswerteeinheit (2) erkennt, an welcher Position sich das Equipment (13) in der metallurgischen Industrieanlage aufhält.

12. Verfahren zur Identifikation von Equipment nach Anspruch 7 - 11, **dadurch gekennzeichnet, dass** der Auswerteeinheit über einen externen Triggereingang (6) von einer Triggereinheit (5) ein Signal übermittelt wird und dadurch die Identifizierung von Equipment gestartet oder beendet wird.

13. Verfahren zur Identifikation von Equipment nach Anspruch 7 - 12, **dadurch gekennzeichnet, dass** durch die Empfangsvorrichtung (1) und die Auswerteeinheit (2) ein Beladungszustand des Equipments (13) direkt erfasst wird.

## Claims

1. Device for identifying equipment (13), in particular metallurgical vessels, in a metallurgical industrial plant, comprising an identification tag attached to the equipment (13), a receiving device and an evaluation unit, which recognizes the equipment (13) on the basis of the identification tag, the identification tag being a three-dimensional identification tag (10), in particular a perforated plate or a plate having three-dimensional patterns, **characterized in that**
- the receiving device (1) is a time of flight (TOF) camera with a photonic mixing device (PMD) sensor, which camera captures the equipment (13) with the three-dimensional identification tag (10),
- an evaluation unit (2) suitable for unambiguously identifying the equipment (11) on the basis of the captured equipment (13) with the three-dimensional identification tag (10) .

2. Device for identifying equipment according to Claim 1, **characterized in that** the receiving device (1) is accommodated in a protective housing.

3. Device for identifying equipment according to Claim 1 or 2, **characterized in that** the evaluation unit (2) is suitable for being able to recognize obstacles or hazards, in particular objects, persons in a defined hazard area or missing connections of supply lines.

4. Device for identifying equipment according to Claims 1-3, **characterized in that** the evaluation unit (2) is suitable for determining a position of the equipment in the metallurgical industrial plant.

5. Device for identifying equipment according to Claims 1-4, **characterized in that** the evaluation apparatus (2) has an external trigger input (6), and the trigger input (6) is connected to a trigger unit (5) suitable for recognizing equipment.

6. Device for identifying equipment according to Claims 1-5, **characterized in that** the evaluation unit (2) is suitable for recognizing a type of the equipment (13) and the evaluation unit is connected to a memory (4) in order to read out data concerning said type.

7. Method for identifying equipment, in particular metallurgical vessels, in a metallurgical industrial plant, the equipment (13) having a three-dimensional identification tag (10), in particular a perforated plate or a plate having three-dimensional patterns, **characterized in that**
- the equipment (13) with the three-dimensional identification tag (10) is captured by a receiving device (1), which is a time of flight (TOF) camera with a photonic mixing device (PMD) sensor,
- an assignment of three-dimensional identification tag (10) and equipment (13) is stored in an evaluation unit (2) or a memory (4),
- the three-dimensional identification tag (10) is recognized by the evaluation unit (2),
- the evaluation unit (2) identifies the equipment (13) on the basis of the three-dimensional identification tag (10).

8. Method for identifying equipment according to Claim 7, **characterized in that** the equipment is captured by the receiving device (1) and the evaluation unit (2) directly determines a type of the equipment (13).

9. Method for identifying equipment according to Claim 8, **characterized in that**, on the basis of said type, data, in particular data concerning the exact position of the three-dimensional identification tag (10), are read out from a memory (4), wherein the evaluation unit (2) uses said data for the identification of the three-dimensional identification tag (10).

10. Method for identifying equipment according to Claims 7-9, **characterized in that** the evaluation unit (2) recognizes obstacles or hazards, in particular objects, persons or missing connections of supply lines, situated in a defined hazard area.

11. Method for identifying equipment according to Claims 7-10, **characterized in that** the evaluation unit (2) recognizes the position occupied by the equipment (13) in the metallurgical industrial plant.

12. Method for identifying equipment according to Claims 7-11, **characterized in that** a signal is communicated to the evaluation unit from a trigger unit (5) via an external trigger input (6) and the identification of equipment is thereby started or ended.

13. Method for identifying equipment according to Claims 7-12, **characterized in that** a loading state of the equipment (13) is detected directly by the receiving device (1) and the evaluation unit (2).

## Revendications

1. Dispositif pour l'identification d'un équipement (13), en particulier de récipients métallurgiques, dans une installation industrielle métallurgique, comportant une marque d'identification appliquée sur l'équipement (13), un dispositif de réception et une unité d'évaluation, laquelle reconnaît l'équipement (13) à l'aide de la marque d'identification, la marque d'identification étant une marque d'identification tridimensionnelle (10), en particulier une plaque perforée ou une plaque avec des motifs tridimensionnels, **caractérisé en ce que**
- le dispositif de réception (1) est une caméra Time of Flight (TOF) avec un détecteur Photonic Mixing Device (PMD), laquelle détecte l'équipement (13) avec la marque d'identification tridimensionnelle (10),
- une unité d'évaluation (2) est appropriée pour identifier clairement l'équipement (11) à l'aide de l'équipement détecté (13) avec la marque d'identification tridimensionnelle (10).

2. Dispositif pour l'identification d'un équipement selon la revendication 1, **caractérisé en ce que** le dispositif de réception (1) est logé dans un boîtier de protection.

3. Dispositif pour l'identification d'un équipement selon la revendication 1 ou la revendication 2, **caractérisé en ce que** l'unité d'évaluation (2) est appropriée pour pouvoir reconnaître des obstacles ou des dangers, en particulier des objets, des personnes dans une zone de danger définie, ou des connexions manquantes de lignes d'alimentation.

4. Dispositif pour l'identification d'un équipement selon l'une des revendications 1 à 3, **caractérisé en ce que** l'unité d'évaluation (2) est appropriée pour déterminer une position de l'équipement dans l'installation industrielle métallurgique.

5. Dispositif pour l'identification d'un équipement selon l'une des revendications 1 à 4, **caractérisé en ce que** le dispositif d'évaluation (2) comprend une entrée de déclenchement externe (6), et l'entrée de déclenchement (6) est reliée à une unité de déclenchement (5), laquelle est appropriée pour reconnaître un équipement.

6. Dispositif pour l'identification d'un équipement selon l'une des revendications 1 à 5, **caractérisé en ce que** l'unité d'évaluation (2) est appropriée pour reconnaître un type de l'équipement (13) et l'unité d'évaluation est reliée à une mémoire (4), afin de lire des données sur ce type.

7. Procédé pour l'identification d'un équipement, en particulier de récipients métallurgiques, dans une installation industrielle métallurgique, l'équipement (13) comprenant une marque d'identification tridimensionnelle (10), en particulier une plaque perforée ou une plaque avec des motifs tridimensionnels, **caractérisé en ce que**
- l'équipement (13) avec la marque d'identification tridimensionnelle (10) est détecté par un dispositif de réception (1), lequel est une caméra Time of Flight (TOF) avec un détecteur Photonic Mixing Device (PMD),
- une association d'une marque d'identification tridimensionnelle (10) et d'un équipement (13) est stockée dans une unité d'évaluation (2) ou une mémoire (4)
- la marque d'identification tridimensionnelle (10) est reconnue par l'unité d'évaluation (2),
- l'unité d'évaluation (2) identifie l'équipement (13) à l'aide de la marque d'identification tridimensionnelle (10).

8. Procédé pour l'identification d'un équipement selon la revendication 7, **caractérisé en ce que** l'équipement est détecté par le dispositif de réception (1) et l'unité d'évaluation (2) détermine directement un type de l'équipement (13).

9. Procédé pour l'identification d'un équipement selon la revendication 8, **caractérisé en ce qu'**à l'aide de ce type, des données, en particulier des données sur la position exacte de la marque d'identification tridimensionnelle (10), sont lues depuis une mémoire (4), dans lequel l'unité d'évaluation (2) fait appel à ces données pour l'identification de la marque d'identification tridimensionnelle (10).

10. Procédé pour l'identification d'un équipement selon l'une des revendications 7 à 9, **caractérisé en ce que** des obstacles ou des dangers, en particulier des objets, des personnes ou des connexions manquantes de lignes d'alimentation, lesquels se trouvent dans une zone de danger définie, sont reconnus par l'unité d'évaluation (2).

11. Procédé pour l'identification d'un équipement selon l'une des revendications 7 à 10, **caractérisé en ce que** l'unité d'évaluation (2) reconnaît en quelle position séjourne l'équipement (13) dans l'installation industrielle métallurgique.

12. Procédé pour l'identification d'un équipement selon l'une des revendications 7 à 11, **caractérisé en ce qu'**un signal est transmis à l'unité d'évaluation par l'intermédiaire d'une entrée de déclenchement externe (6) par une unité de déclenchement (5) et l'identification d'un équipement est ainsi démarrée ou achevée.

13. Procédé pour l'identification d'un équipement selon l'une des revendications 7 à 12, **caractérisé en ce qu'**un état de chargement de l'équipement (13) est détecté directement par le dispositif de réception (1) et l'unité d'évaluation (2).
